# EUROPEAN PATENT SPECIFICATION

(11) **EP 3 306 886 B1**
(45) Date of publication and mention of the grant of the patent: **26.08.2020**
(21) Application number: 16002183.8
(22) Date of filing: 10.10.2016
(51) Int. Cl.: H04L 29/06, H04W 12/02, H04W 12/00, H04W 4/00, H04W 12/04

(54) **LPWA COMMUNICATION SYSTEM JOIN-IN**
VERBINDUNG FÜR LPWA-KOMMUNIKATIONSSYSTEM
SYSTÈME DE COMMUNICATION LPWA JOIN-IN

(43) Date of publication of application: 11.04.2018
(73) Proprietor: Giesecke+Devrient Mobile Security GmbH, 81677 München (DE)
(72) Inventor: Tea, Vui Huang, SE-12061 Stockholm (SE)

(56) References cited:
- N Sornin ET AL: "LoRa Specification V1.0", LoRa Alliance Inc., 31 January 2015 (2015-01-31), XP055286529, Retrieved from the Internet: URL:https://www.lora-alliance.org/portals/ 0/specs/LoRaWAN Specification 1R0.pdf [retrieved on 2016-07-07]
- "LoRa MAC Specification;LTN(14)011004_LoRa_MAC_Speci fications", ETSI DRAFT; LTN(14)011004_LORA_MAC_SPECIFICATIONS, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG, 16 January 2014 (2014-01-16), pages 1-23, XP014159445, [retrieved on 2014-01-16]
- GARCIA R MARIN UNIVERSITY OF MURCIA A KANDASAMY A PELOV ACKLIO D: "LoRaWAN Authentication in RADIUS; draft-garcia-radext-radius-lorawan-01.txt" , LORAWAN AUTHENTICATION IN RADIUS; DRAFT-GARCIA-RADEXT-RADIUS-LORAWAN-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 July 2016 (2016-07-08), pages 1-16, XP015114163, [retrieved on 2016-07-08]
- Olivier Hersent ET AL: "LoRa Device Developer Guide", Orange Connected Objects & Partnerships, 30 April 2016 (2016-04-30), XP055286484, Retrieved from the Internet: URL:https://partner.orange.com/wp-content/ uploads/2016/04/LoRa-Device-Developer-Guid e-Orange.pdf [retrieved on 2016-07-06]

## Description

### Field of the invention

The present invention relates to a communication system employing a wireless Low-Power Wide Area Network LPWA to connect end devices to gateways, which gateways connect to network servers that also connect to application servers, and more specifically an join-in procedure in such a system. LoRa is such an LPWA, the LoRa infrastructure is such a communication system, and LoRa provides such a join-in procedure.

### Background of the invention

Low-Power Wide Area Network LPWA such as the LoRa network allow end devices such as various M2M modules to contact gateways over a large distance. This allows end devices to be contacted also in regions not covered by regular mobile phone networks such as 3G/4G.

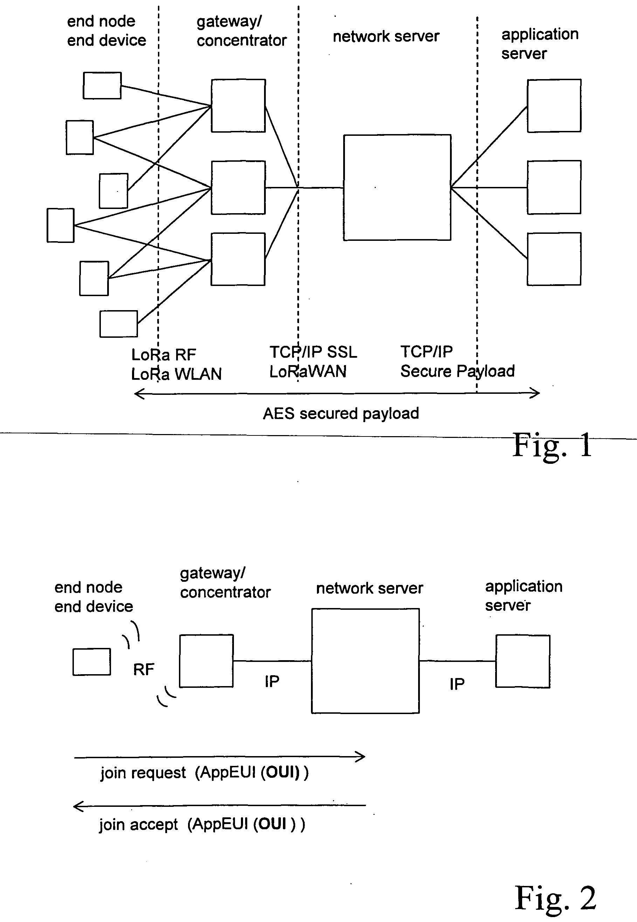

Fig. 1 shows the basic structure of a LoRa infrastructure as an example of an LPWA communication system. Multiple end devices, here named end nodes are connected to multiple gateways, also named concentrators via a wireless ("RF") LoRaWAN network. Usually the number of end devices / nodes is larger than the number of gateways. Examples of end devices shown in Fig. 1 are pet tracking tags, smoke alarms tags, water meter tags, trash container tags, vending machine tags and gas monitoring tags. The gateways connect to a network server via some suited communication path that can physically be either wireless or wirebound, e.g. 3G/4G or Ethernet. Application servers connect to the network server also via some suited communication path that can physically be either wireless or wirebound. Both kinds of communication paths to the network server, i.e. those with the gateways and those with the applications servers, can be run as secure TCP/IP SSL connections. An option is to transfer data between end devices and application servers in an end-to-end encrypted form, as is indicated by an arrow at the base of Fig. 1.

To participate in a LoRaWAN LPWA network, each end-device has to be activated. For Over-The-Air Activation (OTAA) activation, end-devices must follow a join procedure prior to participating in data exchanges with the network-server. Typically each end-device is activated once on deployment, and it proceeds to continuously send data to the network server on a set schedule with the same session context information obtained from the join procedure. An end-device has to go through a new join procedure every time it has lost the session context information. The join procedure requires the end-device to be personalized with the following information before its starts the join procedure: a globally unique end-device identifier (DevEUI), the application identifier (AppEUI), and an AES-128 key (AppKey).

In the LoRa world, OTAA join procedure requires the end-device to be personalized with the following information before its starts the join procedure:
- A globally unique end-device identifier (DevEUI), the application identifier (AppEUI), and an AES-128 key (AppKey) (or in case other key, according to symmetric algorithm used instead of AES-128).
- End-device identifier (DevEUI) is the DevEUI is a global end-device ID in IEEE EUI64 address space that uniquely identifies the end-device.

Application identifier (AppEUI) is the AppEUI is a global application ID in IEEE EUI64 address space that uniquely identifies the application provider (i.e., owner) of the end-device. The LoRa specification states that join-request message is not to be encrypted. In other words, any wannabe hacker can easily scan the unlicensed frequency and pick up the whereabouts, volume, traffic frequency and details of *all* LoRa devices and application providers.

This will enable spammers, direct marketers, identity thieves, or other attackers to use the directory for personal information about those company and services.

The IEEE EUI-64 is formed as:
- A 24-bit Organizationally Unique Identifier (OUI) value assigned by the IEEE Registration Authority (IEEE RA) + a 40 bit extension identifier assigned by the organization with that OUI assignment. (This is an MA-L assignment)
- A 28-bit value assigned by the IEEE RA + a 36-bit extension identifier assigned by the organization with that base assignment. (This is an MA-M assignment)
- A 36-bit OUI-36 value assigned by the IEEE RA + a 28-bit extension identifier assigned by the organization with that OUI-36 assignment. (This is an MA-S assignment)

MAC Address Block Large (MAL): This was previously referred to as an OUI (Organizationally Unique Identifier) and is still referred to as such in many standards. OUI is an IEEE Registration Authority (RA) specific term that is referred to in various standards and may be used to identify companies on the IEEE Public Listing. A MAL assignment includes an OUI and the right to generate various extended identifiers based on that OUI. It is most often used to create IEEE 802 defined MAC addresses (EUI48 and EUI64). The OUI included in the MAL assignment may be appended with 24 organization supplied bits to form a EUI48 or 40 organization supplied bits to form an EUI64. The included OUI may also be used to generate EUI60 (deprecated), CDI32, TCDI40, MAC48 (obsolete term), create multicast addresses (per IEEE Std 802), and as a unique root for various context dependent identifiers. It may also be used as a company identifier in those protocols and protocol standards that specify the use of a 3 octet field as a part of the protocol identification mechanism.

The LoRa Specification V1.0 by N. Sorin et al. describes activation by personalization. Under certain circumstances, end-devices can be activated by personalization. Activation by personalization directly ties an end-device to a specific network by-passing the join request - join accept procedure. Activating an end-device by personalization means that the DevAddr and the two session keys NwkSKey and AppSKey are directly stored into the end-device instead of the Dev EUI, AppEUI and the AppKey.

The LoRa MAC Specification Version SI0.80 by N. Sorin et al. describes a wireless modulation for long-range low-power low-data-rate applications developed by Semtech.

The LoRaWAN Authentication in RADIUS draft by Garcia R. Marvin University describes a proposal for adding LoRaWAN support in RADIUS.

The LoRa Device Developer Guide by Olivier Hersent et al. describes a JOIN procedure management. In order to increase security level on devices, Orange recommends that devices generate a JOIN REQUEST regularly to trigger a JOIN ACCEPT message allowing them to regenerate their network and application session keys.

According to the current situation, the LoRa service providers & equipment manufacturers can do the following. They could register a fake / shell company to apply for cover EUI, but these can be easily traced back to the LoRa service providers & equipment manufacturers. E.g. using Dun & Bradstreet business lookup. They could also 'borrow' an EUI from a LoRa cloud service provider etc., but then they become TIED and LOCKED to these LoRa cloud service provider and not able to move their end devices easily. The 'borrowed' EUI may be an unreliable company that goes bankrupt in 1-2 years, and their LoRa devices and services get associated with an ill-repute, or non-existent company.

After successful join-in, the network server sends to the end device a join-in accept message to inform the end device on its successful joining in into the LPWA network system.

### Objective of the invention

It is an object of the present invention to provide a LPWA based communication system in which users and service providers in the LPWA, particularly the owners or / and operators of application servers, are protected from hackers, hijackers, and data miners seeking to spy out name, address and other details of the users and service providers or application server owners or operators, respectively.

### Summary of the invention

The object of the invention is achieved by a communication system with the features, according to claim 1. Embodiments of the invention are presented in dependent claims.

The invention is an improvement to the join-in procedure of a LPWA. The crucial element of the invention is a privacy layer constructed to collaborate with the join-in means by which the join-in procedure is run. Said privacy layer is constructed to, in the join-in request message, replace the Organizationally Unique Identifier OUI of the owner or operator of the application server with the Organizationally Unique Identifier OUI (e.g. the G&D OUI) of an owner or operator of the privacy layer, wherein the owner or operator of the privacy layer is different from the owner or operator of the application server.

By the inventive replacement of OUI, an attacker sees join-in request messages for end devices that all seem to belong to the owner or operator of the privacy layer (e.g. to G&D). The real owner or operator remains hidden. This can be of particular interest, when the operator of an application server is an official security organization such as the police, or the like, especially in a use case of surveying public places with use of end devices connected via an LPWA network. Such official security organizations might have particular interest that their presence doesn't become obvious to attackers.

The end device must somehow be brought into possession of the privacy layer's OUI. Preferably this is done in that the end device first preliminarily connects to the LPWA network with a temporary AppEUI OUI or/and DevEUI OUI, preferably those with which the end device is personalized.

Once the end device is connected to the network server, the privacy layer initiates that the end device is provided with the privacy layer's own OUI, and enforces a disconnection and re-join-in of the end device. The re-join-in, and preferably all further LPWA network traffic, is done with privacy layer's own OUI.

### Brief description of the drawings

Embodiments of the invention will now be described with reference to the accompanying drawings, throughout which like parts are referred to by like references, and in which represents:
- Fig. 1: a diagram showing the basic structure of a typical LoRa network system, as an example of a LPWA communication system, according to the prior art;
- Fig. 2: a diagram showing schematic flow of join request and join accept messages, as underlying the invention;
- Fig. 3: a detailed diagram showing flow of a join in request from an end device to a gateway, and options of attack;
- Fig. 4: a diagram showing schematic flow of join request and join accept messages, according to embodiments of the invention.

### Detailed description of the invention

Fig 2 shows a diagram showing schematic flow of join request and join accept messages, as underlying the invention. Normally, the join request message would contain, in the AppEUI, the application server OUI. The join request message and the join accept message each comprise AppEUI, DevEUI and DeviceNonce. The AppEUI and the DevEUI comprise each a OUI.

According to an embodiment of the invention, for privacy and safety against attackers, LoRa service providers & equipment manufacturers can engage the G&D LoRa EUI Privacy Service. Giesecke & Devrient Group (G&D) is an globally trusted international technology group of excellent reputation and is here for the long haul and will never sell their data to a third party. By using a G&D EUI for their end-device identifier (DevEUI) and application identifier (AppEUI), spammers, direct marketers, identity thieves, or other attackers will not know who or what the actual application providers and devices are.

Today, G&D already has a MAC Address Block Large (MAL) Organizationally Unique Identifier (OUI) value assigned by the IEEE Registration Authority (IEEE RA). "0090D3" issued to "GIESECKE & DEVRIENT GmbH, PRINZREGENTENSTRASSE 159 D-81677, MUNCHEN, DE". For example, instead of identifying themselves as AppEUI: 1234568888877716, they can mask themselves as anonymous G&D service AppEUI: 0090D30000000001.

The supporting technical/ operating portion & business process on how we can ensure world-class security/privacy like a Swiss bank:
- E.g. assignment of the Privacy GUI is not sequential but random with true random number generator (TRNG), hence the attackers can't deduce / narrow down suspected identifies by 3rd party company registration/creation date.
- 'Blind' entry, G&D personal doing registration is only shown the next available random EUI for assignment, he/she will not know what were previously assigned and to whom. Detail tamper-proof logging of admin usage by date/time etc.
- Secure assignment database, require concurrent security login by 2-3 high-security clearance personal before they can do a single-entry search, and all searches are logged in detail in tamper-proof logs.
- EUI database is kept off-line with no network connection, and in a secure room. E.g. biometric-entry VISA/MasterCard grade room with 24-hour CCD cameras.
- All personal dealing with the EUI must be security screened, e.g. no criminal record, not in debt, or connections with hacking groups etc.
- All above steps to be verified and validated by ISO standards.

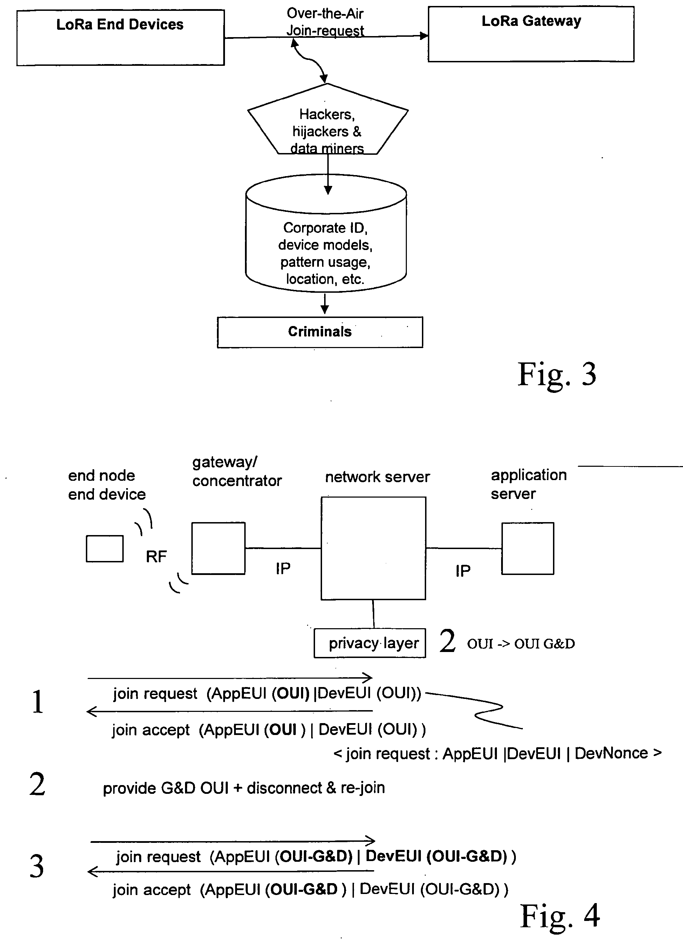

Fig. 4 shows a diagram showing schematic flow of join request and join accept messages, according to embodiments of the invention. The join request message comprises AppEUI, DevEUI and DeviceNonce. The AppEUI and the DevEUI comprise each a OUI. According to the invention, the application server OUI in the AppEUI and in the DevEUI is replaced with G&D's OUI who is owner of the privacy layer. For this purpose, the privacy layer provides the end device with G&D's OUI, such that the end device can send a join in request with the replaced OUI.
(1) First, the end device performs a normal join in with normal AppEUI and DevEUI, usually those personalized into the end device (i.e. the application server OUI), as temporary AppEUI and DevEUI.
(2) Second, the privacy layer initiates disconnection of the end device from the LPWA network. Further, the privacy layer initiates that the end device is provided with the privacy layer OUI, i.e. the G&D OUI. The end device generates a final AppEUI and a final DevEUI by replacing, in the temporary AppEUI, DevEUI of step (1), the application server OUI with the G&D OUI received from the network server as initiated by the privacy layer.
(3) Third, the end device re-connects by performing a new join-in, sending therein a join-in request message to the network server, in which AppEUI and DevEUI comprise G&D OUI instead of application server OUI.

Further on, only the final AppEUI and a final DevEUI with G&D OUI are sent over the LPWA network any more.

Methods of enforcing a new join-in include but are not limited to: sending a proprietary downlink command (via the network-server) to the end-device; disconnecting the end-device from the network via a simulated replay attack by sending previously recorded join-request message to urge the end device to automatically perform a new join procedure.

## Claims

1. A communication system, comprising:
a) a wireless Low-Power Wide Area Network LPWA;
b) at least one network server;
c) at least one application server or a plurality of application servers, connectable to the network servers;
d) at least one gateway or a plurality of gateways;
e) at least one end device or a plurality of end devices, each end device being personalized with at least:
f) an, at least within the LPWA network, unique device identifier DevEUI,
g) for at least one application server, an application server identifier AppEUI and a symmetric cryptographic key AppKey of respective application server, the AppEUI or/and the DevEUI comprising an Organizationally Unique Identifier OUI, by which an owner or operator of the application server is uniquely identified;
h) wherein each of the one or plurality of end devices is connectable to the network server via a gateway, wherein each end device is connectable to a gateway via the LPWA;
i) wherein the system comprises join-in means constructed to perform a join-in procedure of joining in end devices to the LPWA by execution of an over-the-air-activation OTAA procedure network protocol, the join-in procedure comprising:
j) at the network server, receiving from an end device a join-in request message, the join-in request message comprising at least the DevEUI and the AppEUI,
k) verifying, using the DevEUI, if the end device is permitted to join the LPWA and, if it is permitted, activating the end device in the system, and
l) connecting, using the AppEUI, the activated end device to the application server specified by the AppEUI;
**characterized in that** the system further comprises:
m) a privacy layer constructed to collaborate with the join-in means of step i), therein being constructed to, in the join-in request message, replace the Organizationally Unique Identifier OUI of the owner with the Organizationally Unique Identifier OUI (G&D OUI) of an owner of the privacy layer or replace the Organizationally Unique Identifier OUI of the operator of the application server with the Organizationally Unique Identifier OUI (G&D OUI) of an operator of the privacy layer, wherein the owner or operator of the privacy layer is different from the owner or operator of the application server, so that the real owner or operator of the application server remains hidden.

2. The communication system according to claim 1, the join-in procedure of step i) further comprising the step:
12) after successful join-in, by the network server, sending to the end device a join-in accept message to inform the end device on its successful joining in into the LPWA;
**characterized in that:**
the privacy layer of m) is further constructed to, in the join-in accept message, replace the Organizationally Unique Identifier OUI of the owner or operator of the application server with the Organizationally Unique Identifier OUI (G&D OUI) of an owner or operator of the privacy layer, wherein the owner or operator of the privacy layer is different from the owner or operator of the application server.

3. The communication system according to claim 1 or 2, wherein the privacy layer is constructed to provide the Organizationally Unique Identifier OUI (G&D OUI) of an owner or operator of the privacy layer to the end device before the end device sends the join-in request message, particularly such that the end device can send a join-in message with the Organizationally Unique Identifier OUI of the owner or operator of the application server replaced with the Organizationally Unique Identifier OUI (G&D OUI) of an owner or operator of the privacy layer.

4. The communication system according to any of claims 1 to 3, wherein the privacy layer is further constructed to control the join in procedure to comprise the following steps:
i1) initiating a join-in procedure of the end device using the AppEUI OUI or/and DevEUI OUI with which the end device is personalized or some other temporary AppEUI OUI or/and DevEUI OUI;
i2) providing the end device with the OUI of the privacy layer and initiating a disconnection of the end device from the LPWA;
i3) initiating a join-in procedure of the end device using the AppEUI OUI of the privacy layer or/and DevEUI OUI of the privacy layer.

## Patentansprüche

1. Ein Kommunikationssystem, umfassend:
a) ein drahtloses Low-Power-Wide-Area-Network LPWA;
b) mindestens einen Netzwerkserver;
c) mindestens einen Anwendungsserver oder eine Vielzahl von Anwendungsservern, die mit den Netzwerkservern verbindbar sind;
d) mindestens ein Gateway oder eine Vielzahl von Gateways;
e) mindestens ein Endgerät oder eine Vielzahl von Endgeräten, wobei jedes Endgerät personalisiert ist mit mindestens:
f) einer zumindest innerhalb des LPWA-Netzwerkes eindeutigen Gerätekennung DevEUI,
g) einer Anwendungsserverkennung AppEUI und einem symmetrischen kryptographischen Schlüssel AppKey des jeweiligen Anwendungsservers für mindestens einen Anwendungsserver, wobei die AppEUI oder/ und die DevEUI einen Organizationally-Unique-Identifier OUI umfassen, durch den ein Eigentümer oder Betreiber des Anwendungsservers eindeutig identifiziert wird;
h) wobei jedes der einen oder Vielzahl von Endgeräte über ein Gateway mit dem Netzwerkserver verbindbar ist, wobei jedes Endgerät über den LPWA mit einem Gateway verbindbar ist;
i) wobei das System Beitrittsmittel umfasst, die so ausgestattet sind, dass sie ein Beitrittsverfahren zum Beitreten von Endgeräten mit dem LPWA durch Ausführen eines Netzwerkprotokolls eines Luftaktivierungsverfahrens (OTAA, over-the-air-activation) durchführen, wobei das Beitrittsverfahren umfasst:
j) am Netzwerkserver, Erhalten einer Beitrittsanforderungsnachricht von einem Endgerät, wobei die Beitrittsanforderungsnachricht mindestens die DevEUI und die AppEUI umfasst,
k) Verifizieren, mittels der DevEUI, ob das Endgerät zulässig ist, dem LPWA beizutreten, und, falls dies zulässig ist, das Endgerät im System zu aktivieren, und
l) Verbinden, mittels der AppEUI, das aktivierte Endgerät mit dem Anwendungsserver, der von der AppEUI bestimmt wird;
**dadurch gekennzeichnet, dass** das System ferner umfasst:
m) eine Datenschutzebene, die so ausgestattet ist, dass sie mit dem Beitrittsmittel des Schrittes i) zusammenwirkt, die darin so ausgestattet ist, dass sie in der Beitrittsanforderungsnachricht den Organizationally-Unique-Identifier OUI des Eigentümers durch den Organizationally-Unique-Identifier OUI (G&D OUI) eines Eigentümers der Datenschutzebene ersetzt oder den Organizationally-Unique-Identifier OUI des Betreibers des Anwendungsservers durch den Organizationally-Unique-Identifier OUI (G&D OUI) des Betreibers des Anwendungsservers der Datenschutzebene ersetzt, wobei sich der Eigentümer oder Betreiber der Datenschutzebene von dem Eigentümer oder Betreiber des Anwendungsservers unterscheidet, so dass der tatsächliche Eigentümer oder Betreiber des Anwendungsservers verborgen bleibt.

2. Das Kommunikationssystem nach Anspruch 1, wobei das Beitrittsverfahren von Schritt i) den Schritt weiter umfasst:
12) nach erfolgreichem Beitreten, durch den Netzwerkserver, Senden einer Beitrittsannahmenachricht an das Endgerät, um das Endgerät über das erfolgreiche Beitreten zum LPWA zu informieren;
**dadurch gekennzeichnet, dass:**
die Datenschutzebene von m) ferner so ausgestattet ist, dass sie in der Beitrittsannahmenachricht den Organizationally-Unique-ldentifier OUI des Eigentümers oder Betreibers des Anwendungsservers durch den Organizationally-Unique-ldentifier OUI (G&D OUI) eines Eigentümers oder Betreibers der Datenschutzebene ersetzt, wobei der Eigentümer oder Betreiber der Datenschutzebene sich von dem Eigentümer oder Betreiber des Anwendungsservers unterscheidet.

3. Kommunikationssystem nach Anspruch 1 oder 2, wobei die Datenschutzebene so ausgestattet ist, dass sie den Organizationally-Unique-ldentifier OUI (G&D OUI) eines Eigentümers oder Betreibers der Datenschutzebene dem Endgerät bereitstellt, bevor das Endgerät die Beitrittsanforderungsnachricht sendet, insbesondere so, dass das Endgerät eine Beitrittsnachricht mit dem Organizationally-Unique-ldentifier OUI des Eigentümers oder Betreibers des Anwendungsservers senden kann, der durch den Organizationally-Unique-ldentifier OUI (G&D OUI) eines Eigentümers oder Betreibers der Datenschutzebene ersetzt wird.

4. Das Kommunikationssystem gemäß einem der Ansprüche 1 bis 3, wobei die Datenschutzebene weiter so ausgestattet ist, um das Beitrittsverfahren zu kontrollieren, umfassend die folgende Schritte:
i1) Initiieren eines Beitrittsverfahrens des Endgeräts unter Verwendung der AppEUI OUI oder/und DevEUI OUI, mit der das Endgerät personalisiert wird, oder einiger anderen temporären AppEUI OUI oder/und DevEUI OUI;
i2) Bereitstellen des OUI der Datenschutzebene für das Endgerät und Initiieren einer Trennung des Endgeräts vom LPWA;
i3) Initiieren eines Beitrittsverfahrens des Endgeräts unter Verwendung der AppEUI OUI der Datenschutzebene oder/und der DevEUI OUI der Datenschutzebene.

## Revendications

1. Système de communication, comprenant :
a) un réseau étendu à faible puissance sans fil (LPWA, Low-Power Wide Area Network) ;
b) au moins un serveur de réseau ;
c) au moins un serveur d'application ou une pluralité de serveurs d'application pouvant être connectés aux serveurs de réseau ;
d) au moins une passerelle ou une pluralité de passerelles ;
e) au moins un dispositif terminal ou une pluralité de dispositifs terminaux, chaque dispositif terminal étant personnalisé avec au moins :
f) un identifiant de dispositif unique DevEUI, au moins dans les limites du réseau LPWA ;
g) pour au moins un serveur d'application, un identifiant de serveur d'application AppEUI et une clé cryptographique symétrique AppKey de serveur d'application respectif, le AppEUI et/ou le DevEUI comprenant un identifiant unique sur le plan organisationnel OUI, par lequel un propriétaire ou opérateur du serveur d'application est identifié de manière unique ;
h) dans lequel chacun des un ou plusieurs dispositifs terminaux peut être connecté au serveur de réseau via une passerelle, dans lequel chaque dispositif terminal peut être connecté à une passerelle via le LPWA ;
i) dans lequel le système comprend des moyens d'invitation à participer construits pour mettre en œuvre une procédure d'invitation à participer pour inviter des dispositifs terminaux à participer au LPWA par exécution d'un protocole de réseau à procédure d'activation par liaison radio (over-the-air activation, OTAA), la procédure d'invitation à participer comprenant les étapes suivantes :
j) sur le serveur de réseau, recevoir d'un dispositif terminal, un message de demande d'invitation à participer, le message de demande d'invitation à participer comprenant au moins le DevEUI et l'AppEUI ;
k) vérifier, à l'aide du DevEUI, si le dispositif terminal est autorisé à participer au LPWA, et s'il y est autorisé, activer le dispositif terminal dans le système, et
l) connecter, à l'aide de l'AppEUI, le dispositif terminal activé au serveur d'application spécifié par l'AppEUI ;
**caractérisé en ce que** le système comprend en outre :
m) une couche de confidentialité construite pour collaborer avec les moyens d'invitation à participer de l'étape i), construite dans ceux-ci pour remplacer, dans le message de demande d'invitation à participer, l'identificateur unique sur le plan organisationnel OUI du propriétaire par l'identificateur unique sur le plan organisationnel OUI (G&D OUI) d'un propriétaire de la couche de confidentialité, ou pour remplacer l'identificateur unique sur le plan organisationnel OUI de l'opérateur du serveur d'application par l'identificateur unique sur le plan organisationnel OUI(G&D OUI) d'un opérateur de la couche de confidentialité, dans lequel le propriétaire ou l'opérateur de la couche de confidentialité est différent du propriétaire ou opérateur du serveur d'application, de sorte que le propriétaire réel ou l'opérateur du serveur d'application demeure caché.

2. Système de communication selon la revendication 1, la procédure d'invitation à participer de l'étape i) comprenant en outre l'étape pour :
12) après réussite de l'invitation à participer, par le serveur de réseau, envoyer au dispositif terminal un message d'acceptation d'invitation à participer afin d'informer le dispositif terminal quant à la réussite de son invitation à participer dans le LPWA ;
**caractérisé en ce que**
la couche de confidentialité de m) est en outre construite pour remplacer, dans le message d'acceptation d'invitation à participer, l'identificateur unique sur le plan organisationnel OUI du propriétaire ou opérateur du serveur d'application par l'identificateur unique sur le plan organisationnel OUI(G&D OUI) d'un propriétaire ou opérateur de la couche de confidentialité, dans lequel le propriétaire ou opérateur de la couche de confidentialité est différent du propriétaire ou opérateur du serveur d'application.

3. Système de communication selon la revendication 1 ou 2, dans lequel la couche de confidentialité est construite pour fournir l'identificateur unique sur le plan organisationnel OUI(G&D OUI) d'un propriétaire ou opérateur de la couche de confidentialité au dispositif terminal avant que le dispositif terminal n'envoie le message de demande d'invitation à participer, en particulier de telle sorte que le dispositif terminal peut envoyer un message d'invitation à participer avec l'identificateur unique sur le plan organisationnel OUI du propriétaire ou opérateur du serveur d'application remplacé par l'identificateur unique sur le plan organisationnel OUI(G&D OUI) d'un propriétaire ou opérateur de la couche de confidentialité.

4. Système de communication selon l'une quelconque des revendications 1 à 3, dans lequel la couche de confidentialité est en outre construite pour commander la procédure d'invitation à participer de manière à comprendre les étapes suivantes :
i1) lancer une procédure d'invitation à participer du dispositif terminal à l'aide du AppEUI OUI et/ou du DevEUI OUI avec lesquels le dispositif terminal est personnalisé ou un quelconque autre AppEUI OUI et/ou DevEUI OUI temporaire ;
i2) doter le dispositif terminal du OUI de la couche de confidentialité et lancer une déconnexion du dispositif terminal du LPWA, et
i3) lancer une procédure d'invitation à participer du dispositif terminal à l'aide du AppEUI OUI de la couche de confidentialité et/ou du DevEUI OUI de la couche de confidentialité.
